# EUROPEAN PATENT SPECIFICATION

(11) **EP 1 754 594 B1**
(45) Date of publication and mention of the grant of the patent: **05.05.2010**
(21) Application number: 05736976.1
(22) Date of filing: 28.04.2005
(51) Int. Cl.: B29D 30/60

(54) **METHOD FOR FORMING GREEN TIRE**
VERFAHREN ZUM AUSBILDEN VON GRÜNEN REIFEN
PROCÉDÉ DE FABRICATION D'UN PNEU VERT

(30) Priority: 08.06.2004 JP 2004169733
(43) Date of publication of application: 21.02.2007
(73) Proprietor: Bridgestone Corporation, Tokyo 104-8340 (JP)
(72) Inventor: OGAWA, Yuichiro, BRIDGESTONE CORPORATION, T. C, Kodaira-shi, Tokyo 187-8531 (JP)
(74) Representative: Whalley, Kevin
(86) International application number: PCT/JP2005/008156
(87) International publication number: WO 2005/120814

(56) References cited:
- WO-A1-03/041941
- JP-A- 57 201 640
- JP-A- 2003 340 935
- JP-A- 2004 025 533
- JP-A- 2004 074 730
- US-A- 3 892 616

## Description

The present invention relates to a method for building a green tire with forming an unvulcanized rubber member by winding an unvulcanized rubber ribbon on a rotating supporting body over a plurality of laps, in particular which can prevent defects such as bares, creases and air inclusion.

There is conventionally known a method for building a green tire in which, in order to downsize an extruding apparatus, improve the tire uniformity and deal with a manufacturing of a wide variety of sizes in small lots, an unvulcanized rubber member having a predetermined section is formed by winding and laminating an unvulcanized rubber ribbon extruded from a small extruder directly onto a rotating supporting body to form an unvulcanized rubber member having a predetermined section in the course of building a green tire (see, for example, Patent Document 1).

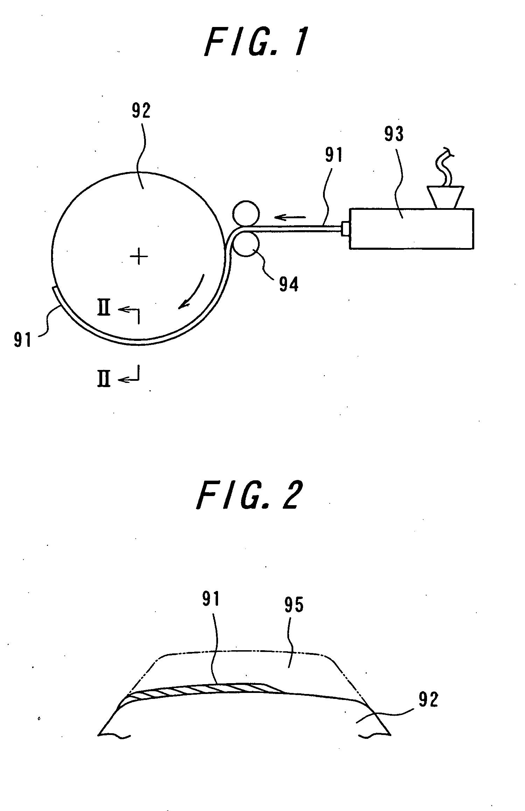

Fig. 1 is a schematic view showing the conventional method, and Fig. 2 is a schematic sectional view showing an unvulcanized rubber member in the process of being formed by the conventional method, taken along the line II - II in Fig. 1. In this method for building a green tire, an unvulcanized rubber ribbon 91 is extruded from an extruder 93, led to a supporting body 92 directly, and then wound on the supporting body 92 by rotating the supporting body 92 while pressing the unvulcanized rubber ribbon 91 against the supporting body 92 with an attaching roller 94 to form a unvulcanized rubber member 95.

This method has an advantage that the unvulcanized rubber ribbon 91 extruded from the extruder 93 and still in a high temperature state is directly wound on the supporting body 92 without temporarily stocking it at another position so that the unvulcanized rubber ribbon 91 can be strongly bonded to the supporting body 92 or the unvulcanized rubber ribbon without using adhesives and the like.

However, when the unvulcanized rubber ribbon 91 remains in the high temperature state, a gas is generated. When this gas is generated between the wound unvulcanized rubber ribbon 91 and the supporting body 92, or between unvulcanized rubber ribbons 91 laminated with each other, a gap filled with the gas is created therebetween to cause a so-called blister (a blistering state). This blister is deformed and crushed during the vulcanization process to cause crimps, which lead to defects such as bares and creases, on a surface of a product tire. Meanwhile, when the gap is not closed and remains still, the blister causes another defect which is called an air inclusion.

Further, when the unvulcanized rubber ribbon 91 remains in the high temperature state, the blister can be produced by other factors in addition to the generation of gas. This is because air is heated and expanded by the unvulcanized rubber ribbon 91 with high temperature to cause a blister (a blistering state) even when a small amount of air remains and is sealed between the wound unvulcanized rubber ribbon 91 and the supporting body 92, or between unvulcanized rubber ribbons 91 laminated with each other.

If the unvulcanized rubber ribbon 91 remains in the high temperature state, it tends to cause blistering due to the mechanism described above. To avoid this, the unvulcanized rubber ribbon 91 extruded from the extruder 93 may be cooled prior to winding it on the supporting body 92 (see, for example, Patent Document 2). It is noted that a device mentioned in Patent Document 2 is entirely different from the present invention in terms of the object of cooling and is an example of cooling the unvulcanized rubber ribbon 91 to improve a resistance property of the rubber to ozone cracking.
[Patent Document 1] Japanese Patent Application Laid-Open No. 2002-160284
[Patent Document 2] Japanese Patent Application Laid-Open No. 2002-154991

However, because the method in which the unvulcanized rubber ribbon 91 prior to winding it on the supporting body 92 involves such problems that the unvulcanized rubber ribbon 91 is cooled only during a part of a short section lying from the extruder 93 to the attaching roller 94, it is difficult to cool the unvulcanized rubber ribbon 91 to a temperature at which a blister cannot occur, and this method might reduce the adhesivity of the rubber strip as the rubber ribbon is cooled prior to bonding.

The present invention is produced in view of these problems, and the object of the present invention is to provide a method for building a green tire, which can cool the unvulcanized rubber ribbon sufficiently without sacrificing the adhesion performance to prevent an occurrence of blistering.
Attention is also drawn to the disclosures of JP-2003-340935A, JP-2004-074730A, and US-3892616A

The present invention provides a method for building a green tire with forming an unvulcanized rubber member by winding an unvulcanized rubber ribbon on a rotating supporting body over a plurality of laps, wherein at least during a period from start to finish of winding the unvulcanized rubber ribbon, a cooling gas is continuously sprayed on an entire region of the surface of a rotating green tire under the process of building defined by a range in the width direction corresponding to the overall width of the unvulcanized rubber member and by a predetermined angular range in the circumferential direction to cool the wound unvulcanized rubber ribbon.

The cooling gas is preferably sprayed only while the supporting body is rotating.

The angular range in the circumferential direction of the surface of the green tire under the process of building on which the cooling gas is sprayed is preferably a range of 90 degrees or more fixed in a predetermined direction.

Air is preferably used as the cooling gas.

According to the invention, at least during the period from start to finish of winding the unvulcanized rubber ribbon, the cooling gas is continuously sprayed on the entire region of the surface of the rotating green tire under the process of building defined by the range in the width direction corresponding to the overall width of the unvulcanized rubber member and by the predetermined angular range in the circumferential direction, so that the wound unvulcanized rubber ribbon can be cooled many times and additionally for a long time to prevent the occurrence of blistering. Furthermore, the unvulcanized rubber ribbon is not cooled prior to winding so that the adhesivity of the unvulcanized rubber ribbon cannot be sacrificed.

The cooling gas is preferably sprayed only while the supporting body is rotating so as to prevent deterioration of tire uniformity. If the cooling gas is sprayed from the gas outlet while the supporting body does not rotate, there may be a difference in the physical properties between a circumferential portion of the unvulcanized rubber ribbon which is cooled by the cooling gas being sprayed and a circumferential portion of the unvulcanized rubber ribbon which is not cooled, which may deteriorate the tire uniformity.

The predetermined angular range in the circumferential direction of the surface of the green tire under the process of building on which the cooling gas is sprayed is preferably the range of 90 degrees or more fixed in the predetermined direction, so that the area being cooled is spread to further enhance the cooling effect to thereby prevent the occurrence of blistering effectively.

Air is preferably used as the cooling gas so that the green tire can be cooled in a simple and cheap manner.

For carrying out the method of the invention, there may be provided a cooling blower for generating and sending cooling gas and a gas outlet from which the cooling gas generated in the cooling blower is sprayed and the outlet is so arranged that the cooling gas is sprayed on the entire region of the surface of the supporting body defined by a range in the width direction corresponding to the overall width of the unvulcanized rubber member and by the predetermined angular range in the circumferential direction. This allows, as mentioned above, the wound unvulcanized rubber ribbon to be cooled many times, in addition, for a long time to prevent the occurrence of blistering.

When the device further comprises a spray control means for controlling the start and the end of spraying the cooling gas from the gas outlet and the spray control means is so configured as to start spraying the gas after the supporting body starts rotating for winding the unvulcanized rubber ribbon and to stop spraying before the supporting body ends the rotation, the cooling gas can be constrained to be sprayed only while the supporting body is rotating, as described above, to prevent deterioration of the tire uniformity.

Preferably, a switching damper and a releasing outlet releasing the cooling gas to the outside are provided on a path for leading the cooling gas from the cooling blower to the gas outlet and the switching damper is so configured as to be switched between an open position where the releasing outlet is closed and the cooling blower communicates with the gas outlet and a closed position where the releasing outlet is opened and the cooling blower discommunicates with the gas outlet, and the spray control means is so configured that it conducts the control in which the cooling blower is continuously operated or a control in which the operation of the cooling blower begins before the cooling gas starts being sprayed from the gas outlet and ends after the cooling gas stops being sprayed, and the switching damper is switched between the open position and the closed position so that the start and the end of spraying can be controlled with much better response as compared with controlling them by directly switching the cooling blower, on and off.
The invention will be further described with reference to the accompanying drawings, wherein

FIG. 1 is a diagram showing a conventional method for building a green tire.
FIG. 2 is a schematic sectional view showing an unvulcanized rubber member formed with the conventional method.
FIG. 3 is a perspective view showing a device for cooling a green tire in an embodiment of a method according to the present invention.
FIG. 4 is a diagram explaining a problem when a cooling gas is sprayed from a gas outlet while a supporting body does not rotate.
FIG. 5 is a sectional view showing a switching damper.
FIG. 6 is a graph explaining an effect of using a device for cooling a green tire when a tread rubber is built by winding an unvulcanized rubber ribbon.
FIG. 7 is a sectional view of an unvulcanized rubber member showing in a state where the unvulcanized rubber ribbon of the innermost layer is under the process of winding.

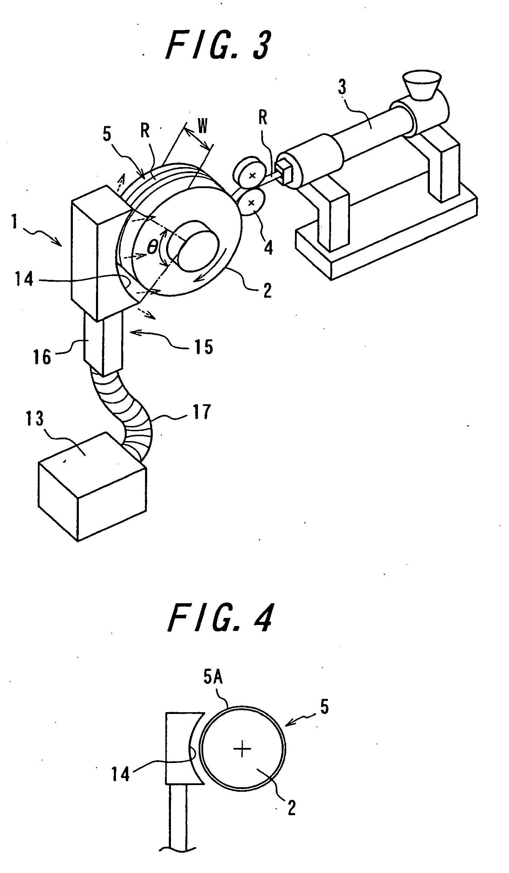

With reference to the drawings, embodiments of the present invention will be discussed. Fig. 3 is a perspective view showing a device for cooling a green tire in an embodiment of a method according to the present invention. In this embodiment, a device 1 for cooling the green tire has a cooling blower 13 which is so configured as to cool an unvulcanized rubber ribbon R extruded from an extruder 3 and wound on a rotating supporting body 2 via an attaching roller 4 and which generates and sends a cooling gas, a gas outlet 14 from which the cooling gas generated in the cooling blower 13 is sprayed, a blower path 17 leading the cooling gas from the cooling blower 13 to the gas outlet 14, and a switching damper 16 communicating and discommunicating the cooling blower 13 with the gas outlet 14.

Herein, the supporting body 2 represents a rotatable body extending radially inward of an unvulcanized rubber member 5 formed by winding the unvulcanized rubber ribbon R, and, for example, the supporting body 2 is an already-formed belt in a case of forming a tread rubber as the unvulcanized rubber member as shown in Fig. 3, or it is a building drum or a rigid core in a case of forming an inner liner rubber as the unvulcanized rubber member.

The gas outlet 14 is fixedly provided, and the cooling gas from the gas outlet 14 is uniformly sprayed on an entire region of a surface of the rotating green tire under the process of building defined by a range in the width direction corresponding to an overall width W of the unvulcanized rubber member 5 and by a predetermined angular range θ of the circumferential direction.

The range in the width direction of the surface of the green tire under the process of building on which the cooling gas is sprayed corresponds to the overall width W in a finished state of the unvulcanized rubber member 5 so that regardless of the position of the unvulcanized rubber ribbon R wound newly in the tire width direction, the unvulcanized rubber ribbon R immediately after being wound can be cooled. Besides, a plurality of unvulcanized rubber ribbons R aligned in the tire width direction can be cooled together at one time, and furthermore the supporting body 2 can be cooled so that a significantly high cooling effect can be achieved to prevent an occurrence of a blister.

The angular range θ of the tire circumferential direction defining the area on which the cooling gas is sprayed is preferably 90 degrees or more to expand the range to be cooled. This can further enhance the cooling effect and thus prevent an occurrence of a blister effectively.

Furthermore, the cooled gas is preferably not sprayed on the unvulcanized rubber ribbon R if the supporting body 2 does not rotate and remains in a halt state. This is because when cooling gas is sprayed from the outlet 14 while the supporting body 2 does not rotate, as shown in Fig. 4, there may be a difference in the physical properties between a portion 5A which is blown and cooled by the cooling gas and the remaining portion, which may deteriorate the tire uniformity.

For this reason, it is preferred that at least a spray control means for controlling the start and the end of spraying the cooling gas from the gas outlet is provided in the device for cooling the green tire 1. The spray control means is operated in such a manner that the spraying starts after the supporting body starts rotating to wind the unvulcanized rubber ribbon and it ends before the supporting body ends the rotation.

Although the spraying of the cooling gas from the gas outlet 14 can be started and stopped by switching an operation of the cooling blower 13 on and off, the volume of the blower path 17 is large and thus there is a considerable time delay from switching the operation of the cooling blower 13 on or off to the start or the end of spraying the cooling gas from the gas outlet 14, respectively, which makes it difficult to control the start and the end of spraying the cooling gas in a timely manner. Therefore, it is preferred to control the start and the end of spraying by controlling the switching damper 16.

In this case, in order to enable the control of the start and the end of spraying by controlling the switching damper 16, it is a prerequisite that the cooling blower 13 is continuously running or that the operation of the cooling blower 13 starts before the start of spraying the cooling gas from the gas outlet 14 and stops after the end of blowing, so that the spray control means controls the cooling blower 13 in this manner.

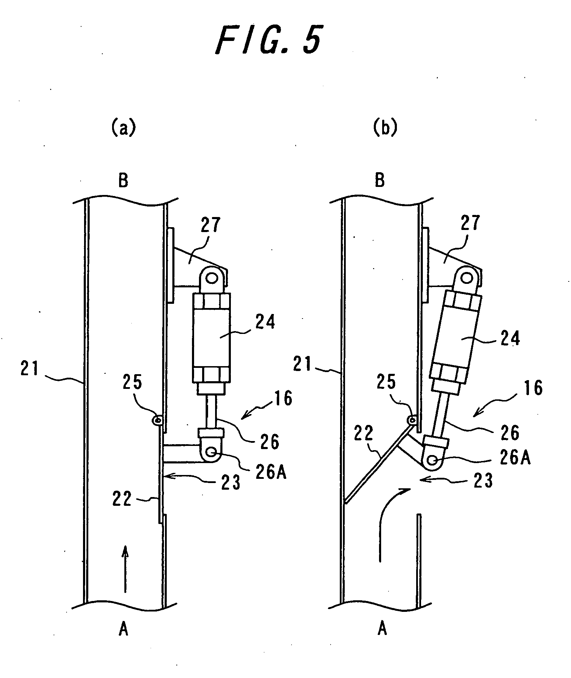

Fig. 5 is a fragmentary sectional view showing the switching damper 16, and Fig. 5 (a) and Fig. 5 (b) show the states of the cooling blower 13 being communicated and discommunicated with the gas outlet 14 by the switching damper 16, respectively. The switching damper 16 includes a parting board 22 swingably attached around a hinge portion 25 fixed to a duct 21, and a cylinder 24 displacing a rod 26 back and forth to swingably actuate the parting board 22 around the hinge portion 25 which is swingably connected to a tip 26A of the rod 26. The end of the cylinder opposed to the rod 26 is swingably attached to the duct 21 via a bracket 27.

In Fig. 5, the reference character A designates the upstream of the duct 21, that is the side where the cooling blower 13 is located, and the reference character B designates the downstream of the duct 21, that is, the side where the gas outlet 14 is located.

In addition, there is provided a releasing outlet 23 opening a part of the duct 21 located upstream of the hinge part 25 to release the cooling gas to the outside.

In the state that the rod 26 is retracted into the cylinder 24, as shown in Fig. 5(a), the parting board 22 swingably connected to the tip 26A of the rod 26 is at a position where this parting board 22 is swung around the hinge portion 25 in a direction approaching to the opening 23. In this state, the releasing outlet 23 is closed and the cooling blower 13 communicates with the gas outlet 14.

On the other hand, in the state that the rod 26 is extended from the cylinder 24, as shown in Fig. 5(b), the parting board 22 swingably connected to the tip 26A of the rod 26 is at a position where this parting board 22 is swung around the hinge portion 25 in a direction away from the opening 23. In this state, the releasing outlet 23 is opened and the cooling blower 13 discommunicates with the gas outlet 14.

With the above-mentioned configurations, the switching damper 16 can be shifted between the open position where the releasing outlet 23 is closed and the cooling blower 13 communicates with the gas outlet 14 and the closed position where the releasing outlet 23 is opened and the cooling blower 13 discommunicates with the gas outlet 14. The switching damper 16 can be shifted between these positions by outputting a signal for operating the cylinder 24 from the blowing control means.

The switching damper 16 is located adjacent to the gas outlet so that if the switching damper 16 is shifted to the closed position, the cooling gas can be immediately stopped from spraying from the gas outlet 14. Contrarily, if the switching damper 16 is shifted to the open position, the cooling gas kept at a low temperature can be immediately led to the gas outlet 14 and start spraying the cooling gas from the gas outlet 14, as the cooling gas flows to be exhausted from the releasing outlet 23 in the upstream adjacent to the parting board.

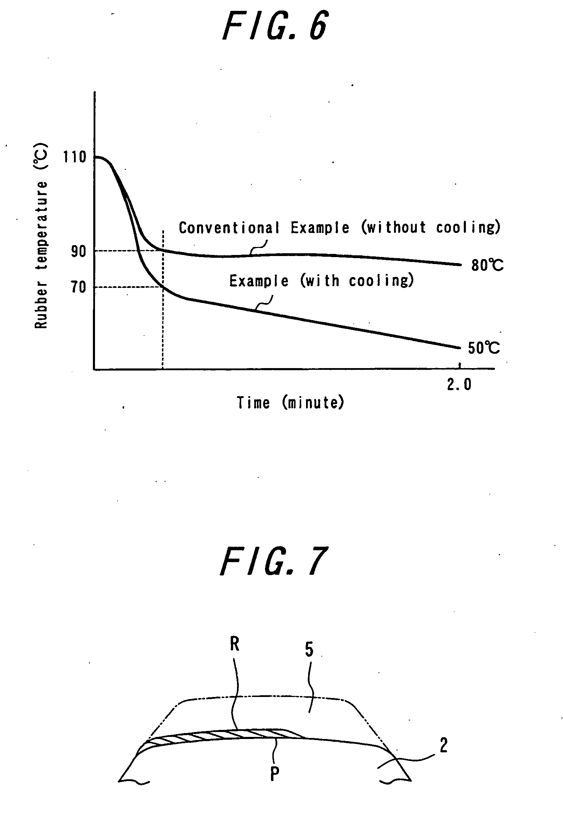

Fig. 6 is a graph showing changes of temperature of an unvulcanized rubber ribbon constituting a radially innermost layer of a tread rubber, in which a tread rubber as an example of the unvulcanized rubber member is formed by winding the unvulcanized rubber ribbon. Example is the case where a green tire is cooled and built with operating the device 1 for cooling a green tire of the above-mentioned embodiment, and Conventional Example is the case where a green tire is built without operating the device 1 for cooling a green tire. In this graph, the ordinate represents temperature (deg. C) of the unvulcanized rubber ribbon, and the abscissa represents elapsed time (minute) from the start of winding.

Fig. 7 is a sectional view of the unvulcanized rubber member 5 showing in a state that the unvulcanized rubber ribbon R in the innermost layer is under the process of winding. A temperature measuring device is attached to the point P on a periphery of the supporting body 2, as shown in Fig. 7, and records the temperature at the point P.

This graph shows that the temperatures of the unvulcanized rubber strip R at the start of winding are approximately the same, but at the end of winding, the temperature of Example is lower by 30 deg. C than that of Conventional Example. From the result, it is appreciated that the device for cooling the green tire has a great cooling capacity.

The present invention can be applied to building a tire of any sizes.

## Claims

1. A method for building a green tire with forming an unvulcanized rubber member (5) by winding an unvulcanized rubber ribbon (R) on a rotating supporting body (2) over a plurality of laps, wherein at least during a period from start to finish of winding the unvulcanized rubber ribbon (R), a cooling gas is continuously sprayed on an entire region of the surface of the rotating green tire under a process of building defined by a range in the width direction corresponding to the overall width (W) of the unvulcanized rubber member (5) and by a predetermined angular range (θ) in the circumferential direction to cool the wound unvulcanized rubber ribbon (R).

2. A method as claimed in claim 1, wherein the cooling gas is sprayed only while the supporting body (2) is rotating.

3. A method as claimed in claim 1 or 2, wherein the angular range (θ) in the circumferential direction of the surface of the green tire under the process of building on which the cooling gas is sprayed is a range of 90 degrees or more fixed in a predetermined direction.

4. A method as claimed in any of claims 1 to 3, wherein air is used as the cooling gas.

## Patentansprüche

1. Verfahren zur Herstellung eines Reifenrohlings, wobei ein unvulkanisiertes Gummielement (5) gebildet wird, indem ein unvulkanisiertes Gummiband (R) auf einen sich drehenden Stützkörper (2) über eine Mehrzahl von Umdrehungen gewickelt wird, wobei mindestens während der Zeitspanne vom Anfang bis zum Ende des Aufwickelns des unvulkanisierten Gummibands (R) ein abkühlendes Gas regelmäßig auf den gesamten Bereich der Oberfläche des sich drehenden Reifenrohlings während des Herstellungsverfahrens gesprüht wird, das durch einen Bereich in der Breitenrichtung, die der Gesamtbreite (W) des unvulkanisierten Gummielements (5) entspricht, und durch einen vorherbestimmten Winkelbereich (θ) in der Umfangsrichtung definiert wird, um das umwickelte unvulkanisierte Gummiband (R) abzukühlen.

2. Verfahren nach Anspruch 1, wobei das abkühlende Gas nur gesprüht wird, währenddem der Stützkörper (2) sich dreht.

3. Verfahren nach Anspruch 1 oder 2, wobei sich der Winkelbereich (θ) in der Umfangsrichtung der Oberfläche des Reifenrohlings während des Herstellungsverfahrens, auf den das abkühlende Gas gesprüht wird, im Bereich von 90 Grad oder mehr befindet und in einer vorherbestimmten Richtung festgelegt ist.

4. Verfahren nach einem der Ansprüche 1 bis 3, wobei Luft als abkühlendes Gas verwendet wird.

## Revendications

1. Procédé destiné à la fabrication d'un pneu cru en formant un élément de caoutchouc non vulcanisé (5) par l'enroulement d'un ruban de caoutchouc non vulcanisé (R) sur un corps de support en rotation (2) sur plusieurs tours, dans lequel, au moins durant une période allant du début à la fin de l'enroulement du ruban de caoutchouc non vulcanisé (R), un gaz réfrigérant est vaporisé de manière continue sur une région entière de la surface du pneu cru en rotation au cours du processus de fabrication défini par une étendue dans la direction de la largeur correspondant à l'ensemble de la largeur (W) de l'élément de caoutchouc non vulcanisé (5) et par une plage angulaire prédéterminée (θ) dans la direction circonférentielle pour refroidir l'élément de caoutchouc non vulcanisé enroulé (R).

2. Procédé tel que revendiqué dans la revendication 1, dans lequel le gaz réfrigérant est vaporisé seulement lors de la rotation du corps de support (2).

3. Procédé tel que revendiqué dans la revendication 1 ou 2, dans lequel la plage angulaire (θ) dans la direction circonférentielle de la surface du pneu cru au cours du processus de fabrication sur lequel le gaz réfrigérant est vaporisé se situe dans une plage de 90 degrés ou plus, établie dans une direction prédéterminée.

4. Procédé tel que revendiqué dans l'une quelconque des revendications 1 à 3, dans lequel de l'air est utilisé en tant que gaz réfrigérant.
